# EUROPEAN PATENT APPLICATION

(11) **EP 4 557 210 A1**
(43) Date of publication of application: **21.05.2025**
(21) Application number: 23209724.6
(22) Date of filing: 14.11.2023
(51) Int. Cl.: G06T 3/4038, G06T 7/11, G06V 10/10, H04N 23/698, G06T 5/10, G06T 5/50

(54) **A METHOD AND A DEVICE FOR STITCHING IMAGE DATA**

(71) Applicant: Axis AB, 223 69 Lund (SE)
(72) Inventor: Murstam, Mikael, 223 69 Lund (SE); Stening, Johan, 223 69 Lund (SE)
(74) Representative: AWA Sweden AB

(57) **Abstract**

A method of stitching image data from one or more image sensors arranged to acquire image data depicting at least partly overlapping views of a scene is disclosed herein. The method comprises obtaining (402) sets of image data representing a blending region; dividing (404) each set of image data into portions of different interest levels; for each portion of image data, determining (406) one or more image frequency bands based on the interest level of the portion, and obtaining (408) image data of the determined one or more image frequency bands from the portion of image data; and blending (410) the first set of image data and the second set of image data by multi-band blending, wherein only the obtained image data of the determined one or more image frequency bands are blended for each portion of image data. A device adapted to perform the method is also disclosed.

## Description

### Technical field

The present invention relates to the field of image processing, in particular to processing methods of stitching video images using multi-band blending.

### Background

It is common to generate so called panoramic images by stitching two or more images having overlapping fields of view. For example, multi-sensor cameras may be used for simultaneously capturing several images and stitching the images together to output panoramic images. The panoramic images may form a video sequence.

Image stitching is generally the process of combining multiple images having overlapping fields of view. The stitching process may be divided into several process stages. First, the images are aligned such that they have matching viewpoints. This can be achieved using transformation. For example, if two images are to be stitched, one of the images may be transformed to match the viewpoint of the other image. The alignment stage may then be followed by a blending stage in which image data of the multiple images are combined in the overlap region of the images, e.g., by forming linear combinations of the image data. The purpose of the blending is to make the transition between the images smooth so that a user viewing the stitched image experiences it as a single image.

There are different variants of blending techniques, where multi-band blending is one of them. In multi-band blending, different versions of an image data set to be blended are generated which represent different image frequency bands. The generation can be achieved in different ways, for example by a technique referred to as Laplacian pyramid decomposition where the set of image data is decomposed into images of different resolutions corresponding to different image frequency bands. The generated images are then blended separately in which known methods may be used, for example linear combinations or more complex methods of weighting contributions of the image's pixel values. Blended images of the different frequency bands are thereafter combined to generate a blended region of the final panoramic image.

Multi-band blending has the advantage of improved stitch appearance and increased image quality in a stitch area of the final panoramic image, however with the disadvantage of a more costly processing. There is thus a need to introduce methods in which the advantages of multi-band blending are achieved to a low processing cost.

### Summary of the invention

An aim of the present invention is to provide a stitching method for video images that provides an improved stitch appearance and/or increased image quality to a decreased processing cost compared to known solutions. Another aim of the present invention is to provide an improved multi-band blending stitching method with respect to processing efficiency.

The invention is defined by the appended claims.

According to a first aspect, the above and other objects are achieved, in full or at least in part, by **claim 1** defining a method of stitching image data from one or more image sensors.

To make use of the advantages of multi-band blending in a processing-efficient manner, the method comprises performing multi-band blending per portion of image data and for one or more image frequency bands that are selected individually for each portion. The invention is based on the realization that image data having different levels of interest, for example different information value for a user viewing the image, can be blended differently with respect to which and how many image frequency bands. The image data to be blended is thus divided into portions based on interest level, and a determination of which frequency bands to use is made for each portion based on its interest level.

Consequently, processing resources can be spent more on providing good quality in interesting image areas and less on less interesting areas. The overall processing level is also decreased compared to conventional multi-band blending where all frequency bands are blended for all image data.

By interest level of image data is here meant a level of interest of the depicted matter for an end application or an end user of the generated stitched images. For example, image data depicting objects may have high level of interest compared to image data depicting sky or nature elements for an object analytics application or a surveillance camera operator. Similarly, image data depicting moving matter may have a higher interest level than image data depicting static matter. Interest level may thus depend on how the stitched image is going to be used and is in other words implementation specific. The detailed description will provide examples of different implementations in which interest level has different basis.

The selection of which image frequency bands to blend for different portions may be free or restricted. In a free selection, the image frequency bands are determined freely with respect to the position and size of the band within the image frequency interval of the image data image frequency values. In other words, the end points of the image frequency bands are determined freely. In a restricted selection, the image frequency bands are selected among a predetermined set of image frequency bands, i.e., image frequency bands with fixed end points.

There are two types of division of the image data into portions: spatial division and color component division. In other words, the image data may be divided into portions of different spatial location or into portions of different components in a color model, such as RGB, CMYK, and YCbCr.

Going more into details of the spatial division, different bases for the division can be implemented. Embodiments of these implementations include:
- image segmentation resulting in spatial regions with objects or matter of different interest levels,
- motion analysis resulting in spatial regions with different levels of motion corresponding to different interest levels,
- predictive coding process resulting in spatial regions which are predicted to be encoded using different coding parameter values, for example different QP values, thereby corresponding to different interest levels,
- image frequency analysis resulting in spatial regions of image data having different image frequency value distributions corresponding to different interest levels,
- user input resulting in user-defined spatial regions having different interest levels, and
- historic input resulting in spatial regions corresponding to a historic division into spatial regions of different interest levels.

In one embodiment, the images are acquired simultaneously, i.e., at essentially the same point in time, by different image sensors. The image sensors may be arranged in a single multi-sensor camera. A benefit with simultaneously acquired images is that the alignment process is simplified in case one or more moving objects are present in the blending region. In addition, the present invention is particularly advantageous in a multi-sensor camera in which the generation of stitched image is performed live, i.e., soon after the capturing of the image, before the images are transmitted from the camera, since there is a particular need for computational efficient stitching algorithms in cameras implementing live stitching.

The method according to the first aspect may be implemented as computer code instructions stored on a computer program product, wherein the computer code instructions are adapted to carry out the method when executed by a device having processing capabilities.

According to a second aspect, these and other objects are achieved, in full or at least in part, by **claim 14** defining a device for stitching image data from one or more image sensors. The device may be a surveillance camera. The device of the second aspect may generally be embodied in the same ways as the method of the first aspect with accompanying advantages.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, a reference to "an object" or "the object" may include several objects, and the like. Furthermore, the word "comprising" does not exclude other elements or steps.

### Brief description of the drawings

The invention will now be described in more detail by way of example and with reference to the accompanying schematic drawings, in which:
Fig. 1 illustrates a multi-sensor camera with image sensors having overlapping field of view of a scene,
Fig. 2 illustrates images having image data depicting an overlap part of a scene,
Fig. 3 illustrates only the overlap part of Fig. 2,
Fig. 4 is a flow chart of a method for stitching image data according to an embodiment, and
Fig. 5 is an overview of components in a camera device that is adapted to perform stitching of image data according to an embodiment.

### Detailed description of embodiments

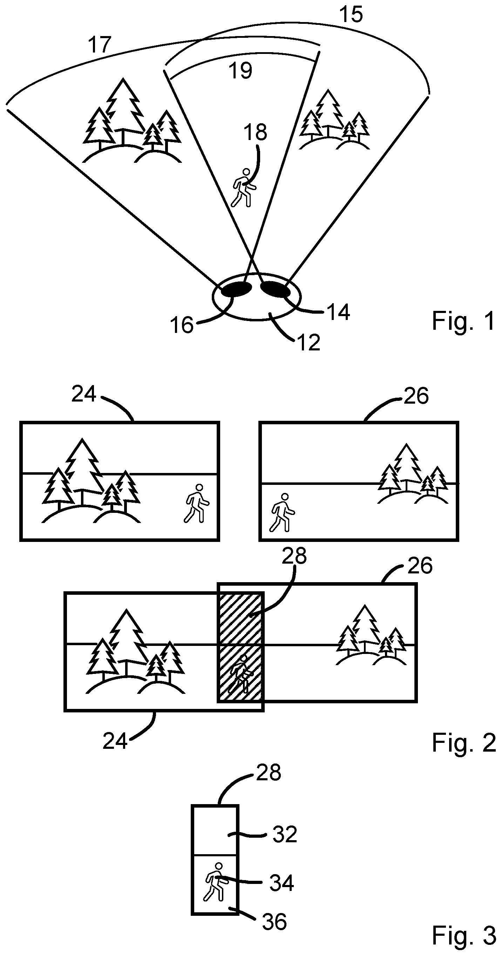

Fig. 1 illustrates a configuration of a multi-sensor camera 12 having multiple image sensors 14, 16 which acquire video depicting a scene 10. In this example, the image sensors 14, 16 are located in a single camera device, however it is equally possible to have image sensors located in separate camera devices. The image sensors 14, 16 are configured with overlapping fields of view 15, 17 for the purpose of generating panoramic video, that is video composed by panoramic images generated by stitching images from the image sensors 14, 16. The scene 10 in this example includes a person 18 walking in an outdoor environment. The person 18 is in Fig. 1 located in an overlap area 19 of the fields of view 15, 17, meaning that the person 18 will be depicted by both image sensors 14, 16.

Fig. 2 illustrates images 24, 26 acquired by the image sensors 14, 16. In order to generate a panoramic image from the images 24, 26, a stitching process is applied. First, the images 24, 26 are aligned as illustrated in the lower part of Fig. 2. The purpose of the alignment is to identify image data of the images 24, 26 that correspond to the same depicted content. In other words, the image data of each image 24, 26 depicting scene content located in the overlap area 19 are identified and matched. The alignment is performed by using conventional methods, for example by identifying matching viewpoints or feature points in each of the images 24, 26 and aligning these. The images 24, 26 may also be subjected to transformation during the alignment.

A blending region 28 is thereafter determined which is represented by a set of image data in each of the images 24, 26. The sets of image data are going to be blended to form a stitched region in the panoramic image. The blending region 28 is in this embodiment equal to the overlap area, however it is appreciated that the blending region 28 may be differently configured, for example being larger or smaller than the overlap area and thus include more or less image data from both images 24, 26 in the sets of image data. In addition, the blending region 28 forms in this embodiment a vertical extension, however it is appreciated that the extension of the blending region 28 may have a different angle, for example being slightly angled to the left or right. Such an embodiment may improve the stitch appearance when an angled object is depicted in the overlap between the images 24, 26, wherein the blending region 28 is angled in the same manner as the object.

A first set of image data is identified in the first image 24, and a second set of image data is identified in the second image 26, both corresponding to the blending region 28. After the first and second set of image data have been identified, these are blended using a variant of multi-band blending in order to generate a smooth transition between the first image 24 and second image 26 in the panoramic image that is going to be formed later. In general, multi-band blending is a known technique in which the first set of image data and second set of image data are blended in a plurality of different image frequency bands. For example, each set of image data is decomposed into a plurality of decomposed sets of image data of different resolutions, thus representing different image frequency bands. The decomposition can be performed according to Laplacian pyramid decomposition. Decomposed sets of image data from the first and second sets of image data are then blended for each frequency band, i.e., the decomposed set of a particular frequency band of the first set of image data is blended with the decomposed set of the same particular frequency band of the second set of image data. The result is a plurality of blended sets of image data which are combined to form a blended region of stitched image data. It is appreciated that other techniques than Laplacian pyramid composition can be applied for the purpose of multi-band blending.

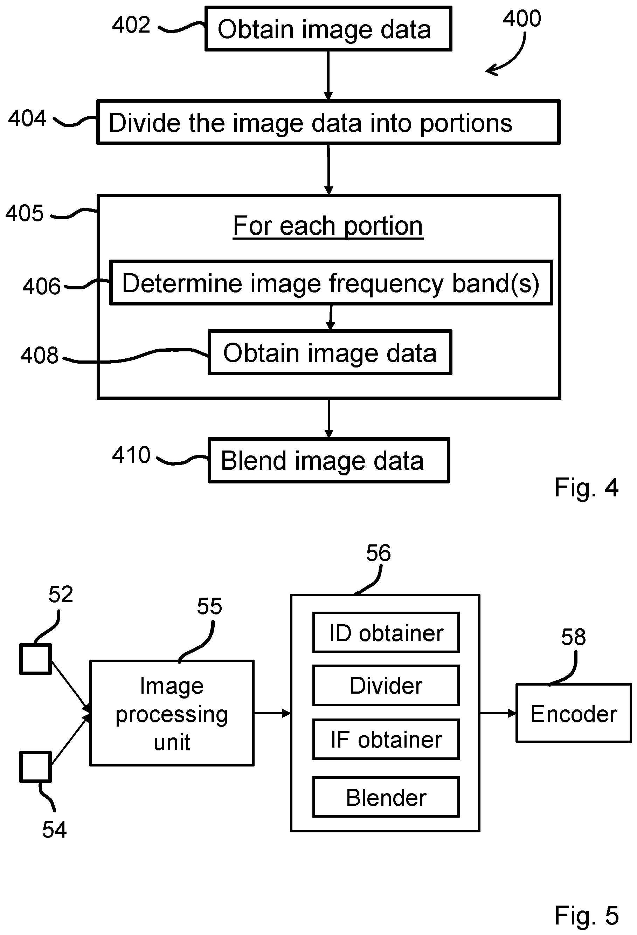

A general variant of multi-band blending that makes use of the inventive concept will now be described with reference to Fig. 4. An aim of the present invention is to make use of advantages of the general multi-band blending technique but to a lower processing cost than known methods. For this purpose, a conscious selection of which image frequency bands to include in the multi-band blending based on an interest level of the image data to be blended is introduced.

In a first step, image data of two images that are to be stitched are obtained 402. The obtained image data represent a determined blending region of the images, as discussed above. Next, the obtained image data are divided 404 into portions having different levels of interest. The portions can be either spatially divided or represent different color components of a color space. Different examples of how to implement the division will be provided later. Next, each portion is subjected to a pre-blending process 405. For each portion, one or more image frequency bands are determined 406, and image data of the determined image frequency bands are obtained S408. The image data may be represented in a spatial domain or in a frequency domain. Next, the image data of the determined image frequency bands are blended 410 for each portion within their image frequency bands in accordance with conventional multi-band blending. Consequently, only image data of the determined image frequency bands are blended for each portion. This can for example mean that one portion is blended by blending image data of a single image frequency band, while another portion is blended by blending image data values of a plurality of image frequency bands. The blended portions are then combined to form a blended region of stitched image data.

The blending 410 is preferably performed in the spatial domain, for example by combining pixel values of the different image data sets using a weight function that determines the contribution of each of the image data sets to the blended image data.

Going more into details of the method, an embodiment will be disclosed with reference to Fig. 2 which illustrates a blending region 28. This embodiment implements a spatial division of the blending region 28. The image data of the blending region 28 are divided into spatial portions 32, 34, 36 of different interest levels and frequency bands are determined for each spatial portion 32, 34, 36. The interest level of image data depends on the application. For example, in a surveillance application a portion depicting a person has a higher interest level a portion depicting sky. In the illustrated example, a first portion 32 corresponds to a sky region, a second portion 34 corresponds to a person, and a third portion 36 corresponds to a ground region. For each of these portions 32, 34, 36, one or more image frequency bands within the image frequency interval of the sets of image data is determined based on the interest level of the portion. The portions are blended separately by applying multi-band blending per portion, as discussed above. The blended image data sets for the portions 32, 34, 36 are then spatially combined to form blended image data of the blending region 28. The blended image data of the blending region 28 is spatially combined with the rest of the image data of images 24, 26 to form a panoramic image. The forming of the panoramic image may include cropping or otherwise adjusting the images 24, 26, for example for the purpose of better appearance.

Going even more into details of the division of the blending region 28 into portions, different embodiments of how the division can be implemented will be described. The purpose of the division is to divide the image data into portions based on their level of interest. Depending on application, the level of interest may be defined differently, which will be exemplified, and there is thus a plurality of variants of how to divide the image data into portions. In general, there are two possible ways. In a first variant, the blending region 28 is divided into *spatial* portions of different interest levels. In a second variant, the blending region 28 is divided into *color components* of different interest levels meaning that the portion forms one or more different color components of a same color model. The variants can be combined such that the blending region 28 is divided into a plurality of spatial portions which in turn is divided into a plurality of color components, or vice versa. In addition, it should be noted that the same division is applied to both sets of image data. This can be implemented by determining a division based on the first set of image data and applying the same division on the second set of image data.

More details of variants of the division into spatial portions will now be described in detail.

In a first embodiment, image data depicting different object types have different levels of interest. For this purpose, the division is based on image segmentation. An image segmentation algorithm of conventional construction is applied to the image data of the blending region 28 to output a segmentation result. The first set of image data or the second set of image data, or both, can be analyzed. These possible choices of image data to be analyzed will be valid for other disclosed embodiments herein as well, where image analysis is included.

The segmentation algorithm can be implemented using for example a neural network. The segmentation result can for example include segmentation results on a pixel level indicating the most likely object class per pixel. The image data of the blending region 28 are divided into portions of pixels having a most likely object class with the same interest level. In a surveillance application, the object class of humans typically has a high interest level, and the object class of sky typically has a low interest level. Pixels most likely being sky would thus be part of another portion than pixels most likely being human.

The segmentation algorithm can alternatively be implemented using a background model which segments foreground pixels from background pixels. The portions would in that case become one or more portions with background pixel image data and one or more portions with foreground pixel image data, wherein the foreground portions for many applications will have a higher interest level than the background portions.

It is appreciated that other variants of segmentation algorithms exist, including ones making use of artificial intelligence, which can be used for the purpose of dividing the image data into spatial portions.

In a second embodiment, image data depicting matter having different levels of movement are of different level of interest. For this purpose, the division is based on motion analysis. Image data of the blending region 28 is analyzed to separate image data containing different motion levels. This can be achieved by comparing the image data to previously acquired image data, preferably in an immediately preceding image, depicting the same scene region. By analyzing changes in pixel values, a level of motion can be determined on a pixel level or a pixel block level. Pixels or pixel blocks having a level of motion within a same motion level interval may be associated and together form a spatial portion, thereby achieving the division. Portions of higher motion level may in some implementations be considered to have higher interest compared to portions of lower motion level.

In a third embodiment, image data that are to be coded using different coding parameter values have different levels of interest. For this purpose, the division is made based on how the image data is likely to be encoded in a following encoding process implementing predictive video coding. The portions that the image data are divided into are spatial portions corresponding to different coding parameter values, for example QP values. QP is a coding parameter that is used in conventional codecs, for example H.264 and H.265, and indicates the level of compression. A high QP value, corresponding to high compression, results in low quality image data, and vice versa.

A prediction of which coding parameter values the image data is going to be encoded with may be achieved by analyzing the image data, or by receiving information from the encoding process. The encoding process may for example provide information representing latest applied QP values or latest motion levels of the encoded image data, which in a standard context would be the image data of one or a few image frames acquired before the image data to be divided. The information may be used for determining spatial areas of different QP values. The portions may be divided to correspond to different intervals of QP values, for example one portion for QP values 0-29, and one portion for QP values 30 and higher. The interest level of a spatial portion corresponding to a lower QP value (or lower QP value interval) is in this embodiment higher than a spatial portion corresponding to a higher QP value (or higher QP value interval). This since high-quality image data may be of greater value than low-quality image data and thus it may be more useful with a better stitch appearance in the high-quality image data portion.

In a fourth embodiment, image data of different image frequencies have different levels of interest. For this purpose, the division is made based on the frequency content of the image data. The image data may be analyzed to determine its image frequency content by conventional algorithms based on, for example, discrete Fourier transform (DFT). The analysis may result in the amount of different image frequency bands per image region. An image region may include one or more pixels. From the amount of different image frequency bands, the division into spatial portions may be done by gathering image regions having the same dominant image frequency band. In other words, a spatial portion will include image data with a same dominant image frequency band. The image frequency bands that are used in the multi-band blending may in this embodiment be determined before or after the analysis. In other words, either the image data is analyzed to determine the amount of image frequency content of predetermined image frequency bands, or the image frequency bands are determined based on the outcome of the image frequency analysis. The latter alternative provides a more flexible solution in that the image frequency bands can be adapted to the frequency content of the image data. In addition, the number of image frequency bands may be adapted to the image frequency content of the image data and can vary between image data sets. On the other hand, the first alternative of predetermined image frequency bands may require less processing resources. For image data where few image frequencies are present, it may be sufficient to determine only two image frequency bands. For image data comprising more varying image frequency content, the image frequency interval of the frequency content may be divided into more than two image frequency bands.

In this fourth embodiment, image data with higher dominant image frequencies may have higher interest level than image data with lower dominant image frequencies.

A detailed variant of division into portions corresponding to different color components of a color space will now be disclosed. In one embodiment, the color space of YCbCr is used as a basis for the division wherein the Y (luminance) component and the CbCr (chroma) components have different interest level. A representation of the image data in the YCbCr color space is generated in known manner and portions of image data representing different color components are formed. One portion may comprise image data of the Y color component and one portion may comprise image data of both Cb and Cr components, i.e., the chroma components. In this embodiment, the portion of the Y color component may have high interest level and the portion of chroma color components may have low interest level. In surveillance applications, the portion of the Y color component is typically more interesting compared to the portion of chroma color components since the Y color component represents structural information which is interesting from a forensic perspective. In other embodiments, division based on the color space of RGB can be applied in a similar manner. For example, in case an image sensor has better resolution in one of the color components, e.g., the G color component, a portion of that color component is more interesting compared to portions of the other color components, e.g., the R and B color components.

The level of interest for a portion of color component may depend on which object the depicted matter is. For example, image data may be firstly divided into spatial portions using segmentation. Each spatial portion is thereafter divided into subportions comprising image data of the spatial portion of different color components, for example Y and CbCr of the YCbCr color space. These subportions have different interest levels depending on the segmentation label of the spatial portion, i.e., depending on which type of matter the portion depicts. In this example, the segmentation label of the portion may be "sky", for which the subportions of Y and CbCr color components have different importance in representing. The Y subportion has a low level of interest for sky since it has a low impact on the representation of sky, and the CbCr subportion has high interest since it has a higher impact on the representation of sky. Consequently, a single image frequency band can be determined for blending the Y subportion. A higher number of image frequency bands may be determined for blending the CbCr subportion. For a segmentation label of "human" or "license plate", the subportions of Y and CbCr color components may have other levels of interest. For a spatial portion of any of these segmentation labels, a subportion of the Y color component may have high level of interest and a subportion of the CbCr color components may have low level of interest, since the Y color component provides more valuable information for depicting a human object or license plate characters.

In one embodiment, a division into portions of different color components may be performed followed by a division of some or each portion into subportions of different spatial components. For example, a division into the color components Y and CbCr may first be performed, followed by a segmentation of the portion of the Y color component into subportions of different segmentation labels which are blended using individually determined frequency bands. A subportion being identified as "sky" may be regarded as low interest and a subportion being identified as "ground" may be regarded as high interest, and frequency bands are determined accordingly. In this example, the portion of the CbCr color components may not be divided into subportions at all, while the portion of Y component is divided into spatial portions. Again, this is an example of how the method can be tailored to needs of a specific implementation without introducing unnecessary processing.

The blended subportions are then combined to form stitched image data for the portion which can, in turn, be blended with other portions according to any of the herein described embodiments.

For both general variants of division, i.e., for division into spatial portions or into portions of different color components, a user-defined division can be applied. In this embodiment, input from a user via for example a user interface may be received. The input may indicate spatial portions and/or color components that are interesting for the user and should thus be assigned a high interest level. The input may for example indicate an image region of a door opening, a road, or a parking lot that is interesting to monitor.

Alternatively, and also for any of the general variants of division, a historic division of the sets of image data in previous sets of image data representing the same image region can be used to determine portions of different levels of interest. This embodiment may include that the portions are determined based on historic division on condition that the depicted scene has not changed sufficiently. Upon a sufficient change is detected, another embodiment, for example division based on segmentation, may be applied temporarily until the scene change is low again and thus not sufficiently changing. The amount of scene change may be determined, for example, based on a motion level determined for an image or based on data from an external sensor such as motion sensor, lidar sensor, or radar sensor.

Going more into detail with respect to the determination of the one or more frequency band for a portion based on interest level of the portion, there are different embodiments for the determination. First, it can be noted that the determination of one or more image frequency bands can comprise a selection from predetermined image frequency bands or can comprise a determination of image frequency bands. The predetermined image frequency bands may be fixed, meaning that they are the same for all processed image data, which may lower the overall processing requirements in that the decomposition can be performed by a hardware module.

In one embodiment, a *higher number* of frequency bands are determined for portions having a higher level of interest.

In another embodiment, one or more frequency bands of *high frequencies* are determined for a portion of higher level of interest compared to a portion of lower level of interest. For example, a portion of high level of interest may be blended in frequency bands of high, medium, and low frequencies, while a portion of low level of interest may be blended in only frequency bands of low frequencies.

In one embodiment, the number of frequency bands that can be blended is restricted due to limited processing capabilities. For example, in a camera device that streams live panoramic video there is limited time and processing resources to stitch more than a certain number of image frequency bands. In one example, a maximum of two bands can be blended per portion. Which two image frequency bands that are determined is according to the inventive concept based on the interest level of the portion. In an embodiment with predetermined image frequency levels of high, medium, and low image frequency bands, a portion of high interest may be assigned high and medium image frequency bands and a portion of low interest level may be assigned medium and low image frequency bands for the purpose of the multi-band blending. For low interest level portions, it is preferred to choose image frequency bands of lowest frequencies since this typically uses least memory bandwidth. Memory bandwidth may in some implementations be a bottleneck and it is therefore advantageous to decrease the amount of required memory bandwidth.

The determination of frequency bands, in case they are not fixed, may be determined for each portion of each set of image data, or be determined now and then and thus apply for several sets of image data. The determination of frequency bands may be based on the content of the spatial portion. For example, a spatial portion corresponding to a segmentation label of "human" may be blended using one or more frequency bands that are determined to be suitable for depicting humans in an image. The determination may be performed by analyzing the spatial portion using a neural network that is trained for determining suitable image frequency bands for image data.

Fig. 5 illustrates components of a camera device 5 which implements an embodiment of the proposed blending method. The camera device 5 comprises a pair of image sensors 52, 54 arranged to acquire image data depicting a scene. The image sensors 52, 54 are arranged with overlapping fields of view of the scene. The acquired image data is fed to an image processing unit 56, sometimes referred to as an image processing pipeline, which is arranged to process the image data with respect to, e.g., noise reduction, white balancing, or tonemapping. The image processing unit 55 may also include image analysis, for example object detection, from which data representing a rough segmentation, motion analysis, or object tracking can be obtained. Processed image data are transmitted to an image stitcher 56 which is adapted to perform image data stitching. The image stitcher 56 may comprise an image data obtainer (ID obtainer) adapted to identify and obtain sets of image data, that are to be blended, from the received image data. The image stitcher 56 further comprises a divider adapted to divide the obtained sets of image data into portions according to any of the herein described embodiments. The image stitcher 56 further comprises an image frequency obtainer (IF obtainer) adapted to perform processing to determine one or more image frequency bands for each portion based on the interest level of the portion, and to obtain image data of the determined one or more image frequency bands from the portion of image data. The divider and the image frequency obtainer may retrieve information from outside the image stitcher 56 for performing their tasks, for example information from the image processing unit 55, memory units (not illustrated), or other processing units (not illustrated). The image stitcher 56 further comprises a blender which is adapted to blend the image data of the blending region using multi-band blending. For each portion, the blender blends the obtained image data of only the determined one or more image frequency bands as described in embodiments herein. The blender also combines the blended portions of image data into stitched image data for the blending region which is combined with the rest of the received image data to form a panoramic image.

Image data corresponding to the panoramic image is sent to an encoder 58 for being video coded according to a conventional video compression standard, such as H.264 or H.265. The encoded panoramic image may thereafter be transmitted from the camera device 5 to a receiver, such as a streaming server. A panoramic video may be generated by continuously acquiring and processing image data which are encoded as a video stream and transmitted from the camera device 5.

The image stitcher 56 of the camera device 5 may be implemented as software, hardware, or a combination of these.

In a hardware implementation, the image stitcher 56 may correspond to circuitry which is dedicated and specifically designed to provide functionality of the components in the image stitcher, i.e., image data obtainer, divider, image frequency obtainer, and blender. The circuitry may be in the form of one or more integrated circuits, such as one or more application specific integrated circuits or one or more field-programmable gate arrays.

In a software implementation, the circuitry may instead be in the form of a processor, such as a microprocessor, which in association with computer code instructions stored on a (non-transitory) computer-readable medium, such as a non-volatile memory, causes the processor to carry out (part of) any method disclosed herein. Examples of non-volatile memory include read-only memory, flash memory, ferroelectric RAM, magnetic computer storage devices, optical discs, and the like. In a software case, the components of the image stitcher 56 may thus each correspond to a portion of computer code instructions stored on the computer-readable medium, that, when executed by the processor, causes the image stitcher 56 to carry out the functionality of the component.

It is to be understood that it is also possible to have a combination of a hardware and a software implementation, meaning that the functionality of some of the components in the image stitcher 56 are implemented in hardware and others in software.

A person skilled in the art realizes that the present invention is not limited to the embodiments described above. On the contrary, many modifications and variations are possible within the scope of the appended claims. Such modifications and variations can be understood and effected by a skilled person in practicing the claimed invention, from a study of the drawings, the disclosure, and the appended claims. For example, a division into spatial portions based on other information than provided by the embodiments herein may be possible provided that the information may be obtained by the image stitcher for performing the division.

## Claims

1. A method of stitching image data from one or more image sensors (14, 16) arranged to acquire image data depicting at least partly overlapping views of a scene, the method comprising:
obtaining (402) a first set of image data and a second set of image data, wherein each set of image data represents a blending region (28),
dividing (404) each set of image data into portions of different interest levels corresponding to a same plurality of spatial regions of the blending region (28) or corresponding to a same plurality of color components,
for each portion of image data,
determining (406) one or more image frequency bands based on the interest level of the portion, and
obtaining (408) image data of the determined one or more image frequency bands from the portion of image data,
blending (410) the first set of image data and the second set of image data by multi-band blending, wherein only the obtained image data of the determined one or more image frequency bands are blended for each portion of image data, thereby generating stitched image data for the blending region (28).

2. The method according to claim 1, wherein the step of determining (406) one or more image frequency bands comprises selecting one or more image frequency bands from a fixed set of image frequency bands.

3. The method according to claim 1 or 2, wherein the sets of image data are divided (404) into portions corresponding to a same plurality of spatial regions of the blending region (28), and comprises
performing image segmentation on the sets of image data, and
dividing the sets of image data into spatial portions (32, 34, 36) corresponding to segmented regions of different interest levels.

4. The method according to claim 3, wherein the image segmentation is preformed using a background model.

5. The method according to claim 3, wherein the image segmentation is performed using an image classification algorithm or image recognition algorithm.

6. The method according to claim 1 or 2, wherein the sets of image data are divided (404) into portions corresponding to a same plurality of spatial regions of the blending region (28), the method further comprising
performing motion analysis on the sets of image data and dividing the sets of image data into spatial regions corresponding to different motion levels having different interest levels.

7. The method according to claim 1 or 2, wherein the sets of image data are divided (404) into a plurality of spatial regions, the method further comprising
receiving information from a predictive coding process indicating coding parameter values for the sets of image data and
dividing the sets of image data into spatial regions corresponding to different coding parameters having different interest levels.

8. The method according to claim 1 or 2, wherein the sets of image data are divided (404) into a plurality of spatial regions, the method further comprising
analyzing the sets of image data to determine the image frequency content, and
dividing the sets of image data into spatial regions with different dominant frequencies having different interest levels.

9. The method according to claim 1 or 2, wherein the sets of image data are divided (404) into a plurality of color components, wherein the color components are Y, Cb, and Cr of the YCbCr color space.

10. The method according to claim 1 or 2, wherein the sets of image data are divided (404) into a plurality of portions based on a user-defined division.

11. The method according to claim 1 or 2, wherein the sets of image data are divided (404) into a plurality of regions, the method further comprising
determining a historic division of the sets of image data in previous sets of image data representing the same image region, and
dividing the sets of image data into a plurality of portions according to the historic division.

12. A method of generating a sequence of stitched images,
obtaining a first image sequence and a second image sequence from a plurality of image sensors (14, 16) arranged to acquire image data depicting at least partly overlapping views of a scene,
for temporally corresponding sets of image data, performing the method according to any one of claims 1-11, and
generating a sequence of stitched images based on the first image sequence, the second image sequence and the generated stitched image data for the blending region (28).

13. A computer program product comprising a computer-readable medium having computer code instructions stored thereon which are adapted to carry out the method of any one of claims 1-12 when executed by a device having processing capabilities.

14. A device for stitching image data from one or more image sensors arranged to acquire image data depicting at least partly overlapping views of a scene, the device comprising:
an image data obtainer arranged to obtain a first set of image data and a second set of image data, wherein each set of image data represents a blending region,
a divider arranged to divide each set of image data into portions of different interest levels corresponding to a same plurality of spatial regions of the blending region or corresponding to a same plurality of color components,
an image frequency obtainer that is adapted to, for each portion of image data,
determine one or more image frequency bands based on the interest level of the portion, and
obtain image data of the determined one or more image frequency bands from the portion of image data,
a blender adapted to blend the first set of image data and the second set of image data by multi-band blending, wherein only the obtained image data of the determined one or more image frequency bands are blended for each portion of image data, thereby generating stitched image data for the blending region.

15. A surveillance camera adapted to provide a live stream of panoramic video, wherein the surveillance camera device comprises a device for stitching image data according to claim 14.

## Amended claims

### Amended claims in accordance with Rule 137(2) EPC.

1. A method of generating stitched image data for an application, wherein the image data is acquired by one or more image sensors (14, 16) arranged to acquire image data depicting at least partly overlapping views of a scene, the method comprising:
obtaining (402) a first set of image data and a second set of image data, wherein each set of image data represents a blending region (28),
defining different levels of interest for image data of different spatial regions or of different color components of a color space depending on an application that the stitched image data is generated for,
dividing (404) each set of image data into portions of different defined interest levels corresponding to a same plurality of spatial regions of the blending region (28) or corresponding to a same plurality of color components, for each portion of image data,
determining (406) one or more image frequency bands for the portion in view of the interest level of the portion, and
obtaining (408) image data of the determined one or more image frequency bands from the portion of image data,
blending (410) the first set of image data and the second set of image data by multi-band blending, wherein only the obtained image data of the determined one or more image frequency bands are blended for each portion of image data, thereby generating stitched image data for the blending region (28) for the application.

2. The method according to claim 1, wherein the step of determining (406) one or more image frequency bands comprises selecting one or more image frequency bands from a fixed set of image frequency bands.

3. The method according to claim 1 or 2, wherein the sets of image data are divided (404) into portions corresponding to a same plurality of spatial regions of the blending region (28), and comprises
performing image segmentation on the sets of image data, and
dividing the sets of image data into spatial portions (32, 34, 36) corresponding to segmented regions of different defined interest levels.

4. The method according to claim 3, wherein the image segmentation is preformed using a background model.

5. The method according to claim 3, wherein the image segmentation is performed using an image classification algorithm or image recognition algorithm.

6. The method according to claim 1 or 2, wherein the sets of image data are divided (404) into portions corresponding to a same plurality of spatial regions of the blending region (28), the method further comprising
performing motion analysis on the sets of image data and dividing the sets of image data into spatial regions corresponding to different motion levels having different defined interest levels.

7. The method according to claim 1 or 2, wherein the sets of image data are divided (404) into a plurality of spatial regions, the method further comprising
receiving information from a predictive coding process indicating coding parameter values for the sets of image data and
dividing the sets of image data into spatial regions corresponding to different coding parameters having different defined interest levels.

8. The method according to claim 1 or 2, wherein the sets of image data are divided (404) into a plurality of spatial regions, the method further comprising
analyzing the sets of image data to determine the image frequency content, and
dividing the sets of image data into spatial regions with different dominant frequencies having different defined interest levels.

9. The method according to claim 1 or 2, wherein the sets of image data are divided (404) into a same plurality of color components, wherein the color components are Y, Cb, and Cr of the YCbCr color space.

10. The method according to claim 1 or 2, wherein the sets of image data are divided (404) into a plurality of portions based on a user-defined division.

11. The method according to claim 1 or 2, wherein the sets of image data are divided (404) into a plurality of regions, the method further comprising
determining a historic division of the sets of image data in previous sets of image data representing the same image region, and
dividing the sets of image data into a plurality of portions according to the historic division.

12. A method of generating a sequence of stitched images,
obtaining a first image sequence and a second image sequence from a plurality of image sensors (14, 16) arranged to acquire image data depicting at least partly overlapping views of a scene,
for temporally corresponding sets of image data, performing the method according to any one of claims 1-11, and
generating a sequence of stitched images based on the first image sequence, the second image sequence and the generated stitched image data for the blending region (28).

13. A computer program product comprising a computer-readable medium having computer code instructions stored thereon which are adapted to carry out the method of any one of claims 1-12 when executed by a device having processing capabilities.

14. A device for generating stitched image data for an application, wherein the image data is acquired by one or more image sensors arranged to acquire image data depicting at least partly overlapping views of a scene, the device comprising:
an image data obtainer arranged to obtain a first set of image data and a second set of image data, wherein each set of image data represents a blending region,
a divider arranged to divide each set of image data into portions of different defined interest levels corresponding to a same plurality of spatial regions of the blending region or corresponding to a same plurality of color components, wherein different levels of interest for image data of different spatial regions or of different color components of a color space are defined depending on an application that the stitched image data is generated for,
an image frequency obtainer that is adapted to, for each portion of image data,
determine one or more image frequency bands for the portion in view of the interest level of the portion, and
obtain image data of the determined one or more image frequency bands from the portion of image data,
a blender adapted to blend the first set of image data and the second set of image data by multi-band blending, wherein only the obtained image data of the determined one or more image frequency bands are blended for each portion of image data, thereby generating stitched image data for the blending region for the application.

15. A surveillance camera adapted to provide a live stream of panoramic video, wherein the surveillance camera device comprises a device for stitching image data according to claim 14.
